# EUROPEAN PATENT APPLICATION

(11) **EP 2 752 396 A1**
(43) Date of publication of application: **09.07.2014**
(21) Application number: 12827405.7
(22) Date of filing: 30.08.2012
(51) Int. Cl.: C03C 27/12, C08L 29/14

(54) **INTERLAYER FOR LAMINATED GLASS, METHOD FOR PRODUCING INTERLAYER FOR LAMINATED GLASS, AND LAMINATED GLASS**

(30) Priority: 31.08.2011 JP 2011189526
(71) Applicant: Sekisui Chemical Co., Ltd., Osaka-shi, Osaka 530-8565 (JP)
(72) Inventor: INUI, Yoshihiro, Mishima-gun Osaka 618-0021 (JP)
(74) Representative: Merkle, Gebhard
(86) International application number: PCT/JP2012/071992
(87) International publication number: WO 2013/031884

(57) **Abstract**

There are provided an intermediate film for laminated glass which is high in tear strength, and laminated glass using the intermediate film for laminated glass. The present invention is directed to an intermediate film for laminated glass used for obtaining laminated glass; the intermediate film for laminated glass comprises a laminate in which 10 or more layers of first layers containing a thermoplastic resin are layered; and the laminated glass according to the present invention is provided with first and second components for laminated glass and the intermediate film for laminated glass sandwiched between the first and second components for laminated glass.

## Description

### TECHNICAL FIELD

The present invention relates to an intermediate film for laminated glass used for obtaining laminated glass, and more specifically, it relates to an intermediate film for laminated glass having a multi-layered structure in which a plurality of layers containing a thermoplastic resin are layered, and a method for producing the intermediate film for laminated glass. Moreover, the present invention relates to laminated glass using the intermediate film for laminated glass.

### BACKGROUND ART

Since laminated glass generates only a small amount of scattering glass fragments even when subjected to external impact and broken, laminated glass is excellent in safety. As such, the laminated glass is widely used for automobiles, railway vehicles, aircraft, ships, buildings and the like. The laminated glass is produced by sandwiching an intermediate film for laminated glass between a pair of glass plates.

As an example of the intermediate film for laminated glass, the following Patent Document 1 discloses a sound insulating layer containing 100 parts by weight of polyvinyl acetal with an acetalization degree of 60 to 85% by mole, 0.001 to 1.0 part by weight of at least one kind of metal salt among an alkali metal salt and an alkaline earth metal salt, and 30 parts by weight or more of a plasticizer. Furthermore, the following Patent Document 1 also describes a multi-layered intermediate film, in which the sound insulating layer is layered on another layer, having a layered structure with a stack of another layer/a sound insulating layer/another layer.

The following Patent Document 2 discloses an intermediate film in which two or more kinds of layers differing in sound transmission loss (TL value) are alternately layered to be 4 or more layers. In this intermediate film, all of the thickness ratios of the layers adjacent to each other lie within the range of 0.9 to 1.1. In Example 2 of Patent Document 2, a multi-layered intermediate film in which two kinds of layers A and B are layered so as to form a layered structure with a stack of A/B/A/B/A/B is described.

In the following Patent Document 3, an intermediate film in which two or more kinds of layers differing in Young's modulus are layered is disclosed. In Examples 1 and 2 of Patent Document 3, a multi-layered intermediate film in which two kinds of layers A and B are layered so as to form a layered structure with a stack of A/B/A is described.

### Related Art Documents

### Patent Documents

Patent Document 1: JP 2007-070200A
Patent Document 2: JP 7-172879A
Patent Document 3: JP 2003-192402A

### SUMMARY OF THE INVENTION

### PROBLEMS TO BE SOLVED BY THE INVENTION

In the case of using the conventional intermediate film such as those described in the above-mentioned Patent Documents 1 to 3 to constitute laminated glass, there is a problem that the tear strength of the intermediate film is low.

Moreover, in recent years, across the automobile industry, in order to cope with increasing fossil fuel prices and reduce CO₂ in view of an influence on global warming, improving fuel consumption has been an important issue. As such, allowing an automobile to become lighter in weight is a matter of importance.

Moreover, in recent years, fueled vehicles employing an internal combustion engine have been shifting to electric vehicles employing an electric motor, hybrid electric vehicles employing an internal combustion engine and an electric motor, and the like. In the laminated glass used for a fueled vehicle employing an internal combustion engine, the sound insulating properties in a relatively low frequency area are especially required. Even in the laminated glass used for a fueled vehicle employing an internal combustion engine, it is desirable that the sound insulating properties in a high frequency area be high. On the other hand, in the laminated glass used for an electric vehicle and a hybrid electric vehicle utilizing an electric motor, high sound insulating properties in a high frequency area are especially required for effectively cutting off the driving sound of an electric motor.

In the case of using the conventional intermediate film such as those described in the above-mentioned Patent Documents 1 to 3 to constitute laminated glass, the sound insulating properties in a high frequency area of the laminated glass are not sufficient, and thus, there are cases where the lowering in sound insulating properties caused by a coincidence effect cannot be avoided. In particular, there are cases where the sound insulating properties at around 20°C of the laminated glass are not sufficient.

In this context, a coincidence effect refers to a phenomenon in which, when a sound wave is made incident into a glass plate, a transverse wave is propagated on the glass surface due to the rigidity and inertia of the glass plate, the transverse wave and the incident sound are resonant with each other, and as a result, the transmission of sound occurs.

An object of the present invention is to provide an intermediate film for laminated glass which is high in tear strength, a method for producing the intermediate film for laminated glass, and laminated glass using the intermediate film for laminated glass.

An object of the present invention with limitation is to provide an intermediate film for laminated glass with which laminated glass excellent in sound insulating properties can be prepared, a method for producing the intermediate film for laminated glass, and laminated glass using the intermediate film for laminated glass.

### MEANS FOR SOLVING THE PROBLEMS

According to a broad aspect of the present invention, there is provided an intermediate film for laminated glass used for obtaining laminated glass, including a laminate in which 10 or more layers of first layers containing a thermoplastic resin are layered.

In a specific aspect of the intermediate film for laminated glass according to the present invention, the laminate is a laminate in which 10 or more layers of first layers containing a polyvinyl acetal as the thermoplastic resin and a plasticizer are layered.

In a specific aspect of the intermediate film for laminated glass according to the present invention, the acetylation degree of the polyvinyl acetal is 8% by mole or less and the acetalization degree thereof is 70% by mole or more, or the acetylation degree of the polyvinyl acetal exceeds 8% by mole.

In another specific aspect of the intermediate film for laminated glass according to the present invention, the average thickness of the first layer is 5 nm or more and 100 µm or less.

In another specific aspect of the intermediate film for laminated glass according to the present invention, the thickness of the laminate is 0.05 mm or more and 3 mm or less.

In still another specific aspect of the intermediate film for laminated glass according to the present invention, at least one among the thickness ratios of the first layers adjacent to each other exceeds 1.1.

In another specific aspect of the intermediate film for laminated glass according to the present invention, at least one among the thickness ratios of the first layers adjacent to each other exceeds 1.2.

In another specific aspect of the intermediate film for laminated glass according to the present invention, the intermediate film further includes one or two second layers with a thickness thicker than any layer-thickness of the first layers, and the second layer is layered on one surface or both surfaces of the laminate.

In still another specific aspect of the intermediate film for laminated glass according to the present invention, the second layer contains a polyvinyl acetal and a plasticizer.

In still another specific aspect of the intermediate film for laminated glass according to the present invention, the outer surface opposite to the laminate side of the second layer is embossed.

In another specific aspect of the intermediate film for laminated glass according to the present invention, the thickness of one layer of the second layer is 0.05 mm or more and 1 mm or less.

In yet another specific aspect of the intermediate film for laminated glass according to the present invention, the laminate is obtained by a multi-layer melt extrusion molding method.

In another specific aspect of the intermediate film for laminated glass according to the present invention, the thermoplastic resin is constituted of a first polyvinyl acetal and a second polyvinyl acetal, a first layer containing the first polyvinyl acetal and a first layer containing the second polyvinyl acetal are alternately layered to be 10 or more layers in total, and the polymerization degrees of the first polyvinyl acetal and the second polyvinyl acetal differ by 10 or more.

Moreover, the method for producing an intermediate film for laminated glass according to the present invention is a production method of the intermediate film for laminated glass described above, and includes the step of molding a laminate in which 10 or more layers of first layers containing a thermoplastic resin are layered by a multi-layer melt extrusion molding method.

In a specific aspect of the method for producing an intermediate film for laminated glass according to the present invention, the laminate is molded by a multi-manifold method or a feed block method.

In another specific aspect of the method for producing an intermediate film for laminated glass according to the present invention, the method further includes the step of layering one or two second layers with a thickness thicker than any layer-thickness of the first layers on one surface or both surfaces of the laminate.

The laminated glass according to the present invention includes a first component for laminated glass, a second component for laminated glass and the intermediate film for laminated glass described above sandwiched between the first component for laminated glass and the second component for laminated glass.

### EFFECT OF THE INVENTION

Since the intermediate film for laminated glass according to the present invention includes a laminate in which 10 or more layers of first layers containing a thermoplastic resin are layered, it is possible to enhance the tear strength.

### BRIEF DESCRIPTION OF THE DRAWINGS

[Fig. 1] Fig. 1 is a cross-sectional view schematically showing an intermediate film for laminated glass in accordance with the first embodiment of the present invention.
[Fig. 2] Fig. 2 is a cross-sectional view schematically showing an intermediate film for laminated glass in accordance with the second embodiment of the present invention.
[Fig. 3] Fig. 3 is a cross-sectional view schematically showing an intermediate film for laminated glass in accordance with the third embodiment of the present invention.
[Fig. 4] Fig. 4 is a cross-sectional view schematically showing an intermediate film for laminated glass in accordance with the fourth embodiment of the present invention.
[Fig. 5] Fig. 5 is a cross-sectional view schematically showing laminated glass provided with the intermediate film for laminated glass shown in Fig. 1.
[Fig. 6] Fig. 6 is a cross-sectional view schematically showing laminated glass provided with the intermediate film for laminated glass shown in Fig. 3.
[Fig. 7] Fig. 7 is a figure for illustrating the shape of a specimen for evaluation used for the measurement of tear strength in examples and comparative examples.

### MODE(S) FOR CARRYING OUT THE INVENTION

Hereinafter, the details of the present invention will be described.

The intermediate film for laminated glass according to the present invention is used for obtaining laminated glass. The intermediate film for laminated glass according to the present invention includes a laminate in which 10 or more layers of first layers containing a thermoplastic resin are layered. By layering many first layers to prepare an intermediate film for laminated glass in this way, it is possible to enhance the tear strength of the intermediate film. When the laminates have a constant thickness, in the case where the number of laminations of the first layers is 5 or more layers, the tear strength of the intermediate film is enhanced as compared to the case where the number of laminations of the first layers is 4 or less layers, and furthermore, in the case where the number of laminations of the first layers is 10 or more layers, the tear strength of the intermediate film is further enhanced as compared to the case where the number of laminations of the first layers is 9 or less layers. In the present invention, the number of laminations of the first layers is 10 or more layers in order to enhance the tear strength of the intermediate film. Moreover, by enhancing the tear strength, the penetration resistance of the laminated glass provided with the intermediate film for laminated glass is increased. Accordingly, this enables a glass plate thinner than the conventional glass plate to be used for obtaining laminated glass while maintaining penetration resistance performance equivalent to conventional performance, and it is possible to allow an automobile to be reduced in weight. Furthermore, since the intermediate film for laminated glass according to the present invention includes a laminate in which 10 or more layers of first layers containing a thermoplastic resin are layered, it is also possible to enhance the sound insulating properties of the intermediate film.

The intermediate film for laminated glass according to the present invention may include the laminate and another layer. The laminate itself may be the intermediate film for laminated glass according to the present invention. The intermediate film for laminated glass according to the present invention may be the laminate as a simple body and may be a composite laminate in which another layer is layered on the laminate. The intermediate film for laminated glass according to the present invention is the laminate or includes at least the laminate.

It is preferred that the intermediate film for laminated glass according to the present invention include a laminate in which 10 or more layers of first layers containing a polyvinyl acetal and a plasticizer are layered. By layering many first layers containing a polyvinyl acetal and a plasticizer to prepare an intermediate film for laminated glass in this way, it is possible to enhance the tear strength of the intermediate film, and furthermore, it is also possible to enhance the sound insulating properties of the intermediate film.

From the viewpoint of further enhancing the tear strength of the intermediate film, it is preferred that 20 or more layers of the first layers be layered, it is more preferred that 40 or more layers thereof be layered, and it is most preferred that 80 or more layers thereof be layered. This is because the stress concentration points are dispersed as the layers increase and a fracture starting point is hardly generated, and therefore the tear strength is enhanced. Although the upper limit of the number of laminations is not particularly limited, it is preferred that the number of laminations be 20000 or less layers, it is more preferred that the number of laminations be 5000 or less layers, and it is further preferred that the number of laminations be 1000 or less layers, since the transparency of the intermediate film is further enhanced. This is because each layer is likely to be smooth and the stress concentration points are dispersed.

Even in the case where 10 or more layers of first layers containing a thermoplastic resin are layered and the average thickness of the first layers is 100 µm or less, it is possible to enhance the tear strength. When the laminates have a constant thickness, in the case where the average thickness of the first layers is 100 µm or less so that the number of laminations of the first layers is increased, the tear strength is further enhanced as compared to the case where the average thickness of the first layers exceeds 100 µm so that the number of laminations of the first layers is decreased.

Hereinafter, the present invention will be elucidated by describing specific embodiments and examples of the present invention with reference to the drawings.

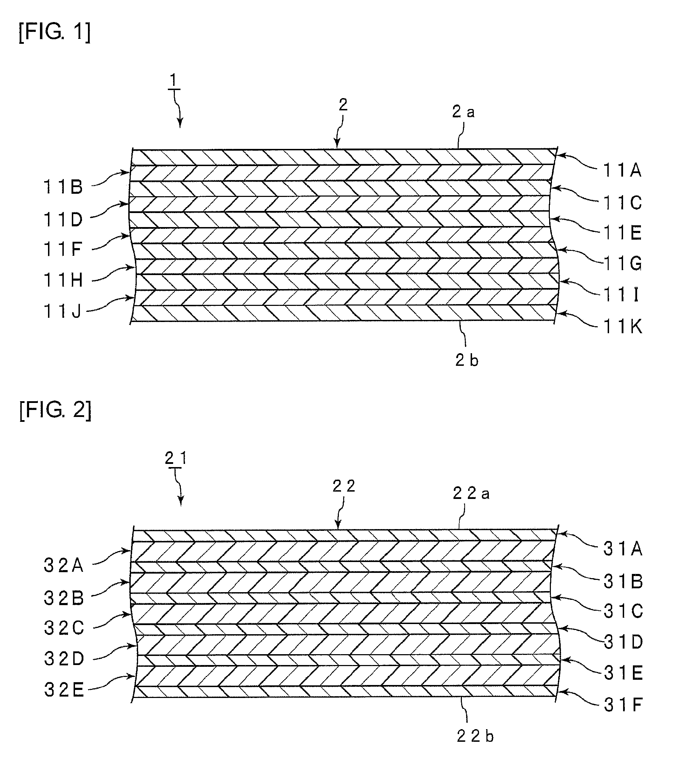

Fig. 1 shows an intermediate film for laminated glass in accordance with the first embodiment of the present invention schematically represented as a cross-sectional view.

An intermediate film 1 shown in Fig. 1 is a laminate 2 in which a plurality of first layers 11A to 11K are layered. The laminate 2 is constituted by layering at least 10 layers of the first layers 11A to 11K. Specifically, the laminate 2 is constituted by layering 11 layers of the first layers 11A to 11K. The first layers 11A to 11K contain a thermoplastic resin. It is preferred that the first layers 11A to 11K contain a polyvinyl acetal and a plasticizer. The first layers 11A to 11K are layered in the thickness direction of the laminate 2. The first layers 11A to 11K may be the same or different from each other in composition, and it is preferred that they be the same each other in composition.

In the intermediate film 1, a first surface 2a and a second surface 2b opposite to the first surface 2a of the laminate 2 are surfaces on each of which a component for laminated glass is layered.

Fig. 2 shows an intermediate film for laminated glass in accordance with the second embodiment of the present invention schematically represented as a cross-sectional view.

An intermediate film 21 shown in Fig. 2 is a laminate 22 in which a plurality of first layers 31A to 31F, 32A to 32E are layered. The laminate 22 is constituted by layering at least 10 layers of the first layers 31A to 31F and 32A to 32E. Specifically, the laminate 22 is constituted by layering 11 layers of the first layers 31A to 31F and 32A to 32E. The first layers 31A to 31F and 32A to 32E contain a thermoplastic resin. It is preferred that the first layers 31A to 31F and 32A to 32E contain a polyvinyl acetal and a plasticizer. The first layers 31A to 31F and 32A to 32E may be the same or different from each other in composition. The first layers 31A to 31F may be the same or different from each other in composition, and it is preferred that they be the same each other in composition. The first layers 32A to 32E may be the same or different from each other in composition, and it is preferred that they be the same each other in composition.

The first layers 31A to 31F and the first layers 32A to 32E are different from each other in thickness. The thicknesses of the first layers 31A to 31F are thinner than the thicknesses of the first layers 32A to 32E. As described above, a plurality of the first layers may be the same or different from each other in thickness. The first layers 31A to 31F and the first layers 32A to 32E are alternately layered in the thickness direction of the laminate 22.

In the intermediate film 21, a first surface 22a and a second surface 22b of the laminate 22 are surfaces on each of which a component for laminated glass is layered.

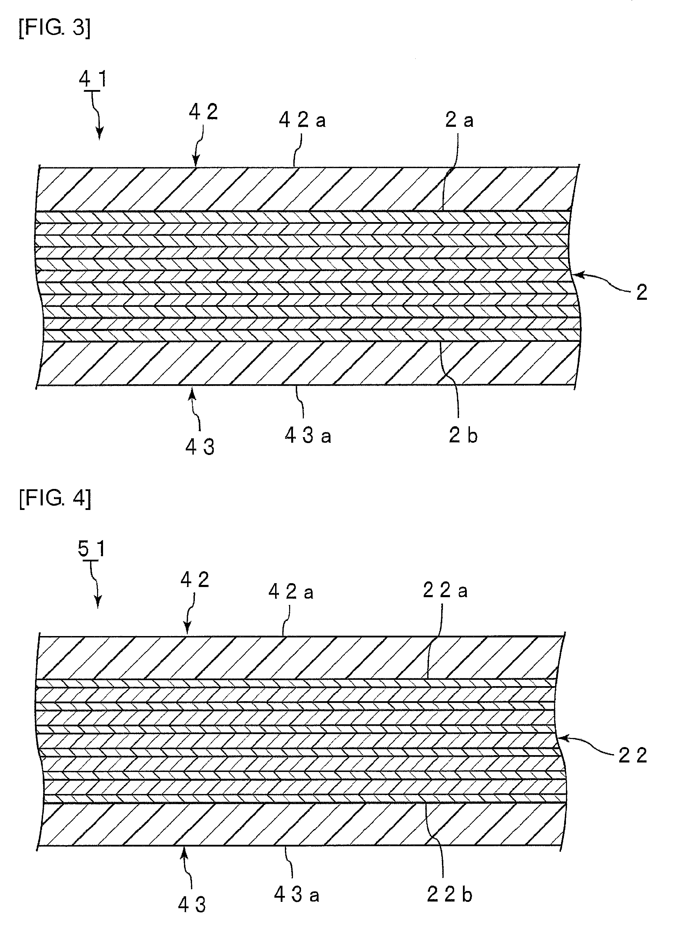

Fig. 3 shows an intermediate film for laminated glass in accordance with the third embodiment of the present invention schematically represented as a cross-sectional view.

An intermediate film 41 shown in Fig. 3 is provided with a laminate 2 shown in Fig. 1, a second layer 42 layered on a first surface 2a of the laminate 2, and a second layer 43 layered on a second surface 2b of the laminate 2. The second layers 42 and 43 differ from the first layers 31A to 31F and 32A to 32E. The second layers 42 and 43 are surface layers. The second layer 42 and the second layer 43 may be the same or different from each other in composition. One second layer 42 may be layered only on the first surface 2a of the laminate 2, and the second layer 43 may not be layered on the second surface 2b. That is, the intermediate film may include one or two second layers different from the first layer and the second layer may be layered on one surface or both surfaces of the laminate. It is preferred that each of the second layers 42 and 43 be singly layered on the first surface 2a and the second surface 2b of the laminate 2, respectively.

Outer surfaces 42a and 43a opposite to the laminate 2 side of the second layers 42 and 43 are embossed, although not shown in the figure. The outer surfaces 42a and 43a may not necessarily be embossed. By providing a second layer and making the thickness of the second layer thicker than the first layer, the outer surface of the second layer can be easily embossed, and furthermore, it becomes easy to form an uneven pattern by an emboss processing only on the second layer without forming on the first layer. In the intermediate film 41, the outer surfaces 42a and 43a of the second layers 42 and 43 are surfaces on which components for laminated glass are layered.

In this connection, the higher the tear strength of the laminate 2 is, the more the tear strength of the intermediate film 41 including the laminate 2 and the second layers 42 and 43 is enhanced. Moreover, the higher the sound insulating properties of the laminate 2 are, the more the sound insulating properties of the intermediate film 41 including the laminate 2 and the second layers 42 and 43 are enhanced.

Fig. 4 shows an intermediate film for laminated glass in accordance with the fourth embodiment of the present invention schematically represented as a cross-sectional view.

An intermediate film 51 shown in Fig. 4 is provided with a laminate 22 shown in Fig. 2, a second layer 42 layered on a first surface 22a of the laminate 22, and a second layer 43 layered on a second surface 22b of the laminate 22. In the intermediate film 51, outer surfaces 42a and 43a of the second layers 42 and 43 are surfaces on which components for laminated glass are layered.

From the viewpoint of further enhancing the tear strength of the intermediate film, the average thickness of the first layers is preferably 5 nm or more, more preferably 50 nm or more, further preferably 100 nm or more, and preferably 100 µm or less, more preferably 50 µm or less, and further preferably 10 µm or less. The thickness of the thinnest first layer is preferably 5 nm or more, and more preferably 50 nm or more. The thickness of the thickest first layer is preferably 100 µm or less, and more preferably 50 µm or less. From the viewpoint of further enhancing the tear strength of the intermediate film, the thickness of one layer of the first layers (any layer-thickness of the first layers) is preferably 5 nm or more, more preferably 50 nm or more, further preferably 100 nm or more, and preferably 100 µm or less, more preferably 50 µm or less, and further preferably 10 µm or less. The thickness of one layer of the first layers (any layer-thickness of the first layers) may be less than 100 µm. The thickness of one layer of two first layers which is positioned at the outermost surface of the laminate is preferably 100 µm or less, more preferably 50 µm or less, and further preferably 10 µm or less. The thickness of one layer of two first layers which is positioned at the outermost surface of the laminate may be less than 100 µm.

It is preferred that at least one among the thickness ratios of the first layers adjacent to each other exceed 1.1, and it is more preferred that at least one among the thickness ratios of the first layers adjacent to each other exceed 1.2. Moreover, at least one among the thickness ratios of the first layers adjacent to each other may be 10 or less, is preferably 5 or less, and may be 2 or less. Even when at least one of the thickness ratios is not less than the above lower limit and not more than the above upper limit, an intermediate film excellent in tear strength and sound insulating properties can be obtained. Moreover, for example, by making the thickness of a layer effectively enhancing the tear strength or the sound insulating properties thick, it is possible to further enhance the tear strength or the sound insulating properties of the intermediate film. The thickness ratio of the first layers adjacent to each other refers to a ratio (A/B) of the thicker thickness A to the thinner thickness B. It is preferred that at least one thickness ratio (A/B) among the thickness ratios (A/B) of the first layers adjacent to each other be not less than the above lower limit and be not more than the above upper limit.

The thickness of the laminate is preferably 0.05 mm or more, more preferably 0.25 mm or more, and preferably 1.5 mm or less, and more preferably 1.0 mm or less. When the thickness of the laminate is not less than the above lower limit, the tear strength of the intermediate film and the penetration resistance are further enhanced. When the thickness of the laminate is not more than the above upper limit, the transparency of the intermediate film is further enhanced.

The thickness of the intermediate film is preferably 0.05 mm or more, more preferably 0.25 mm or more, and preferably 1.5 mm or less, and more preferably 1.0 mm or less. When the thickness of the intermediate film is not less than the above lower limit, the tear strength of the intermediate film and the penetration resistance are further enhanced. When the thickness of the intermediate film is not more than the above upper limit, the transparency of the intermediate film is further enhanced.

From the viewpoint of further improving the sound insulating properties of the intermediate film, the thickness of one layer of the second layers (any layer-thickness of the second layers) is preferably 0.05 mm or more, more preferably 0.25 mm or more, and preferably 1.5 mm or less, more preferably 1.0 mm or less. When the thickness of the second layer is not less than the above lower limit, the thickness of the intermediate film does not become too thick, the sound insulating properties of the intermediate film and the laminated glass are further enhanced, and furthermore, it is possible to suppress the bleed-out of the plasticizer. The thickness of one layer of the second layers (any layer-thickness of the second layers) may be more than 10 µm, may be more than 50 µm, and may be 100 µm or more.

When the thickness of the laminate is defined as T, the thickness of the whole second layer is, although not particularly limited, preferably more than 0.1T, more preferably 0.2T or more, and preferably 0.9T or less, and more preferably 0.8T or less. The thickness of the whole second layer refers to the thickness of one second layer in the case where one second layer is used and refers to the thickness of two second layers in the case where two second layers are used. The first layer and the second layer may be the same or different from each other in composition. It is preferred that the first layer and the second layer be different from each other in composition. The thickness of the second layer is thicker than any layer-thickness of the first layers and is thicker than the maximum thickness of the first layer.

From the viewpoints of further enhancing the adhesivity between the intermediate film and a component for laminated glass and further enhancing the penetration resistance of laminated glass, the ten-point average roughness Rz on the outer surface of the embossed second layer is preferably 0.1 µm or more, more preferably 1 µm or more, and preferably 100 µm or less, and more preferably 50 µm or less. The ten-point average roughness Rz is measured in accordance with JIS B0601: 1994.

It is preferred that the thermoplastic resin be a polyvinyl acetal resin. From the viewpoint of improving the tear strength, the adhesive force, the penetration resistance and the sound insulating properties with good balance, it is preferred that the thermoplastic resin is constituted of a first polyvinyl acetal and a second polyvinyl acetal, a first layer containing the first polyvinyl acetal and a first layer containing the second polyvinyl acetal are alternately layered to be 10 or more layers in total, and the polymerization degrees of the first polyvinyl acetal and the second polyvinyl acetal differ by 10 or more.

Hereinafter, the details of each ingredient contained in the intermediate film for laminated glass according to the present invention will be described.

### (Thermoplastic resin)

The first layer contains a thermoplastic resin. The second layer preferably contains a thermoplastic resin. The thermoplastic resins may be used alone and may be used in combination of two or more thereof.

Examples of the thermoplastic resin include a polyvinyl acetal (a polyvinyl acetal resin), an ethylenevinyl acetate copolymer, an ethylene-acrylic copolymer, a polyurethane and a polyvinyl alcohol. Thermoplastic resins other than these may be used.

From the viewpoint of improving the tear strength, the adhesive force, the penetration resistance and the sound insulating properties with good balance, it is preferred that the thermoplastic resin be a polyvinyl acetal. From the viewpoint of further improving the tear strength, the adhesive force, the penetration resistance and the sound insulating properties with good balance, it is preferred that the first layer contain a polyvinyl acetal as the thermoplastic resin, and it is more preferred that the first layer contain a polyvinyl acetal and a plasticizer. From the viewpoint of further improving the tear strength, the adhesive force, the penetration resistance and the sound insulating properties with good balance, it is preferred that the second layer contain a polyvinyl acetal as the thermoplastic resin, and it is more preferred that the second layer contain a polyvinyl acetal and a plasticizer.

For example, the polyvinyl acetals contained in the first and second layers can be produced by acetalizing polyvinyl alcohol with aldehyde. The saponification degree of the polyvinyl alcohol generally lies within the range of 70 to 99.9% by mole.

The polymerization degree of the polyvinyl alcohol used for obtaining the polyvinyl acetals contained in the first and second layers is preferably 200 or more, more preferably 500 or more, further preferably more than 1700, especially preferably 2000 or more, and preferably 5000 or less, more preferably 4000 or less, even more preferably 3000 or less, further preferably less than 3000, and especially preferably 2800 or less. It is preferred that the polyvinyl acetal be a polyvinyl acetal obtained by acetalizing the polyvinyl alcohol with a polymerization degree not less than the above lower limit and not more than the above upper limit. When the polymerization degree is not less than the above lower limit, the penetration resistance of the laminated glass is further enhanced. When the polymerization degree is not more than the above upper limit, molding of the intermediate film is facilitated.

From the viewpoint of further enhancing the sound insulating properties of the laminated glass, the polymerization degree of the polyvinyl alcohol used for obtaining the polyvinyl acetal contained in the first layer is preferably more than 1700, more preferably 2000 or more, and preferably less than 3000.

The polymerization degree of the polyvinyl alcohol refers to an average polymerization degree thereof, the average polymerization degree is determined by a method in accordance with JIS K6726 "Testing methods for polyvinyl alcohol".

In general, as the aldehyde, an aldehyde with 1 to 10 carbon atoms is suitably used. Examples of the aldehyde with 1 to 10 carbon atoms include formaldehyde, acetaldehyde, propionaldehyde, n-butyraldehyde, isobutyraldehyde, n-valeraldehyde, 2-ethylbutyraldehyde, n-hexyl aldehyde, n-octyl aldehyde, n-nonyl aldehyde, n-decyl aldehyde, benzaldehyde, and the like. Of these, preferred is n-butyraldehyde, n-hexyl aldehyde or n-valeraldehyde, and more preferred is n-butyraldehyde. The aldehydes may be used alone and may be used in combination of two or more thereof.

It is preferred that the polyvinyl acetal contained in each of the first and second layers be a polyvinyl butyral. It is preferred that the intermediate film for laminated glass according to the present invention contain a polyvinyl butyral as the polyvinyl acetal contained in each of the first and second layers. By the use of the polyvinyl butyral, the adhesive force of the intermediate film to a component for laminated glass is further moderately developed. Furthermore, the light resistance, the weather resistance and the like of the intermediate film are further enhanced.

It is preferred that the content ratio of the hydroxyl group (the amount of hydroxyl groups) of the polyvinyl acetal contained in the first layer be 31% by mole or less. When the content ratio of the hydroxyl group of the polyvinyl acetal is low, the hydrophilicity of the polyvinyl acetal is lowered and it is possible to increase the content of a plasticizer. As a result, the sound insulating properties of the laminated glass are further enhanced.

The content ratio of the hydroxyl group of the polyvinyl acetal contained in the first layer is preferably 13% by mole or more, more preferably 18% by mole or more, further preferably 20% by mole or more, especially preferably 21.5% by mole or more, more preferably 30% by mole or less, further preferably 28% by mole or less, and especially preferably 26% by mole or less. When the content ratio of the hydroxyl group is not less than the above lower limit, the adhesive force of the first layer is further enhanced. When the content ratio of the hydroxyl group is not more than the above upper limit, the sound insulating properties of the laminated glass are further enhanced. Furthermore, the flexibility of the intermediate film is enhanced and the handling of the intermediate film is further improved.

The content ratio of the hydroxyl group of the polyvinyl acetal contained in the second layer is preferably 26% by mole or more, more preferably 27% by mole or more, further preferably 28% by mole or more, and preferably 35% by mole or less, more preferably 33% by mole or less, further preferably 32% by mole or less, and especially preferably 31.5% by mole or less. When the content ratio of the hydroxyl group is not less than the above lower limit, the adhesive force of the intermediate film is further enhanced. When the content ratio of the hydroxyl group is not more than the above upper limit, the flexibility of the intermediate film is enhanced and the handling of the intermediate film is further improved.

From the viewpoint of further enhancing the sound insulating properties of the laminated glass, the content ratio of the hydroxyl group of the polyvinyl acetal contained in the first layer is preferably lower, more preferably lower by 1% by mole or more, even more preferably lower by 3% by mole or more, further preferably lower by 5% by mole or more, and especially preferably lower by 7% by mole or more, than the content ratio of the hydroxyl group of the polyvinyl acetal contained in the second layer.

For example, the content ratio of the hydroxyl group of the polyvinyl acetal can be measured in accordance with JIS K6728 "Testing methods for polyvinyl butyral" or in accordance with ASTM D1396-92 to be determined.

The acetylation degree (the amount of acetyl groups) of the polyvinyl acetal contained in the first layer is preferably 0.1% by mole or more, more preferably 0.4% by mole or more, further preferably 0.8% by mole or more, and preferably 30% by mole or less, more preferably 25% by mole or less, further preferably 20% by mole or less, and especially preferably 15% by mole or less. The acetylation degree of the polyvinyl acetal contained in the second layer is preferably 0.1% by mole or more, more preferably 0.4% by mole or more, and preferably 20% by mole or less, more preferably 5% by mole or less, further preferably 2% by mole or less, and especially preferably 1.5% by mole or less. When the acetylation degree is not less than the above lower limit, the compatibility between the polyvinyl acetal and a plasticizer is further enhanced and the glass transition temperature of the intermediate film is sufficiently lowered. When the acetylation degree is not more than the above upper limit, the moisture resistance of the intermediate film is further enhanced.

From the viewpoint of further enhancing the sound insulating properties of the laminated glass, the acetylation degree of the polyvinyl acetal contained in the first layer is preferably higher, more preferably higher by 0.1% by mole or more, even more preferably higher by 0.5% by mole or more, further preferably higher by 1% by mole or more, especially preferably higher by 5% by mole or more, and most preferably higher by 10% by mole or more, than the acetylation degree of the polyvinyl acetal contained in the second layer.

Moreover, from the viewpoint of further enhancing the sound insulating properties of the laminated glass, the acetalization degree of the polyvinyl acetal contained in the first layer is preferably higher than the acetalization degree of the polyvinyl acetal contained in the second layer.

For example, the acetylation degree can be measured in accordance with JIS K6728 "Testing methods for polyvinyl butyral" or in accordance with ASTM D1396-92.

The acetalization degree of the polyvinyl acetal contained in the first layer is preferably 50% by mole or more, more preferably 53% by mole or more, further preferably 60% by mole or more, especially preferably 63% by mole or more, and preferably 85% by mole or less, more preferably 83% by mole, further preferably 80% by mole or less, and especially preferably 78% by mole or less. The acetalization degree of the polyvinyl acetal contained in the second layer is preferably 55% by mole or more, more preferably 60% by mole or more, further preferably 65% by mole or more, especially preferably 67% by mole or more, and preferably 80% by mole or less, more preferably 78% by mole or less, and further preferably 76% by mole or less. When the acetalization degree is not less than the above lower limit, the compatibility between the polyvinyl acetal and a plasticizer is further enhanced and the glass transition temperature of the intermediate film is sufficiently lowered. When the acetalization degree is not more than the above upper limit, the reaction time required for producing the polyvinyl acetal can be shortened.

The acetalization degree is a value expressing the mole fraction determined by dividing the amount of ethylene groups to which the acetal group is bonded by the total amount of ethylene groups in the main chain in terms of percentage (% by mole).

The acetalization degree can be calculated by measuring the acetylation degree (the amount of acetyl groups) and the content ratio of the hydroxyl group (the amount of vinyl alcohol) by a method in accordance with JIS K6728 "Testing methods for polyvinyl butyral" or a method in accordance with ASTM D1396-92, and subtracting the acetylation degree and the content ratio of the hydroxyl group from 100% by mole.

In this connection, in the case where the polyvinyl acetal is a polyvinyl butyral, the acetalization degree (the butyralization degree) and the acetylation degree can be calculated from the results measured by a method in accordance with JIS K6728 "Testing methods for polyvinyl butyral" or ASTM D1396-92. The measurement by a method in accordance with ASTM D1396-92 is preferred.

It is preferred that the polyvinyl acetal contained in the first layer be Polyvinyl acetal A with an acetylation degree a of 8% by mole or less and an acetalization degree a of 70% by mole or more or be Polyvinyl acetal B with an acetylation degree b of more than 8% by mole, since the sound insulating properties of the first layer are further enhanced. The polyvinyl acetal contained in the first layer may be the Polyvinyl acetal A and may be the Polyvinyl acetal B.

The acetylation degree a of the Polyvinyl acetal A is 8% by mole or less, preferably 7.5% by mole or less, more preferably 7% by mole or less, further preferably 6.5% by mole or less, especially preferably 5% by mole or less, and preferably 0.1% by mole or more, more preferably 0.5% by mole or more, further preferably 0.8% by mole or more, and especially preferably 1% by mole or more. When the acetylation degree a is not more than the above upper limit and not less than the above lower limit, the transfer of a plasticizer can be easily controlled and the sound insulating properties of the laminated glass can be further enhanced.

The acetalization degree a of the Polyvinyl acetal A is 70% by mole or more, preferably 70.5% by mole or more, more preferably 71% by mole or more, further preferably 71.5% by mole or more, especially preferably 72% by mole or more, and preferably 85% by mole or less, more preferably 83% by mole or less, further preferably 81% by mole or less, and especially preferably 79% by mole or less. When the acetalization degree a is not less than the above lower limit, the sound insulating properties of the laminated glass are further enhanced. When the acetalization degree a is not more than the above upper limit, the reaction time required for producing the Polyvinyl acetal A can be shortened.

The content ratio a of the hydroxyl group of the Polyvinyl acetal A is preferably 18% by mole or more, more preferably 19% by mole or more, further preferably 20% by mole or more, especially preferably 21% by mole or more, and preferably 31% by mole or less, more preferably 30% by mole or less, further preferably 29% by mole or less, and especially preferably 28% by mole or less. When the content ratio a of the hydroxyl group is not less than the above lower limit, the adhesive force of the intermediate film is further enhanced. When the content ratio a of the hydroxyl group is not more than the above upper limit, the sound insulating properties of the laminated glass are further enhanced.

It is preferred that the Polyvinyl acetal A be a polyvinyl butyral.

The acetylation degree b of the Polyvinyl acetal B is more than 8% by mole, preferably 9% by mole or more, more preferably 9.5% by mole or more, further preferably 10% by mole or more, especially preferably 10.5% by mole or more, and preferably 30% by mole or less, more preferably 28% by mole or less, further preferably 26% by mole or less, and especially preferably 24% by mole or less. When the acetylation degree b is not less than the above lower limit, the sound insulating properties of the laminated glass are further enhanced. When the acetylation degree b is not more than the above upper limit, the reaction time required for producing the Polyvinyl acetal B can be shortened.

The acetalization degree b of the Polyvinyl acetal B is preferably 50% by mole or more, more preferably 53% by mole or more, further preferably 55% by mole or more, especially preferably 60% by mole or more, and preferably 80% by mole or less, more preferably 78% by mole or less, further preferably 76% by mole or less, and especially preferably 74% by mole or less. When the acetalization degree b is not less than the above lower limit, the sound insulating properties of the laminated glass are further enhanced. When the acetalization degree b is not more than the above upper limit, the reaction time required for producing the Polyvinyl acetal B can be shortened.

The content ratio b of the hydroxyl group of the Polyvinyl acetal B is preferably 18% by mole or more, more preferably 19% by mole or more, further preferably 20% by mole or more, especially preferably 21% by mole or more, and preferably 31% by mole or less, more preferably 30% by mole or less, further preferably 29% by mole or less, and especially preferably 28% by mole or less. When the content ratio b of the hydroxyl group is not less than the above lower limit, the adhesive force of the intermediate film is further enhanced. When the content ratio b of the hydroxyl group is not more than the above upper limit, the sound insulating properties of the laminated glass are further enhanced.

It is preferred that the Polyvinyl acetal B be a polyvinyl butyral.

Moreover, it is preferred that the first layer contain Polyvinyl acetal C in which the sum of the acetalization degree and the acetylation degree is 65% by mole or more as the polyvinyl acetal contained therein, since an intermediate film for laminated glass in which the tear strength is further enhanced is obtained.

The acetalization degree c of the Polyvinyl acetal C is preferably 60% by mole or more, more preferably 63% by mole or more, further preferably 66% by mole or more, and preferably 85% by mole or less, more preferably 82% by mole or less, and further preferably 79% by mole or less. When the acetalization degree c is not less than the above lower limit, the sound insulating properties of the laminated glass are further enhanced. When the acetalization degree a is not more than the above upper limit, the reaction time required for producing the Polyvinyl acetal C can be shortened.

The acetylation degree c of the Polyvinyl acetal C is preferably 0.1% by mole or more, more preferably 0.5% by mole or more, further preferably 0.8% by mole or more, and preferably 5% by mole or less, more preferably 3% by mole or less, and further preferably 2% by mole or less. When the acetylation degree c is not more than the above upper limit and not less than the above lower limit, the transfer of a plasticizer can be easily controlled and the sound insulating properties of the laminated glass can be further enhanced.

From the viewpoint of further improving the tear strength and the sound insulating properties, it is preferred that the above-mentioned laminate have a First layer X containing the Polyvinyl acetal A or the Polyvinyl acetal B and a First layer Y containing the Polyvinyl acetal C, and it is preferred that the First layer X containing the Polyvinyl acetal A or the Polyvinyl acetal B and the First layer Y containing the Polyvinyl acetal C be alternately layered. With regard to the Polyvinyl acetal A or the Polyvinyl acetal B and the Polyvinyl acetal C, it is preferred that the polymerization degrees thereof differ, and it is more preferred that the polymerization degrees thereof differ by 10 or more.

### (Plasticizer)

It is preferred that the first layer contain a plasticizer. It is preferred that the second layer contain a plasticizer. The plasticizers may be used alone and may be used in combination of two or more thereof.

Examples of the plasticizer include organic acid ester plasticizers such as a monobasic organic acid ester and a polybasic organic acid ester, organic phosphate ester plasticizers such as an organic phosphate ester plasticizer and an organic phosphite ester plasticizer, and the like. Of these, organic acid ester plasticizers are preferred. It is preferred that the plasticizer be a liquid plasticizer.

Examples of the monobasic organic acid ester include a glycol ester obtained by the reaction of a glycol and a monobasic organic acid, and the like. Examples of the glycol include triethylene glycol, tetraethylene glycol, tripropylene glycol and the like. Examples of the monobasic organic acid include butyric acid, isobutyric acid, caproic acid, 2-ethylbutyric acid, hepthylic acid, n-octylic acid, 2-ethylhexanoic acid, n-nonylic acid, decylic acid and the like.

Examples of the polybasic organic acid ester include an ester compound of a polybasic organic acid and an alcohol having a linear or branched structure of 4 to 8 carbon atoms, and the like. Examples of the polybasic organic acid include adipic acid, sebacic acid, azelaic acid and the like.

Examples of the organic acid ester plasticizer include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic acid ester plasticizers other than these may be used. Other adipic acid esters other than the above described adipic acid esters may be used.

Examples of the organic phosphate ester plasticizer include tributoxyethyl phosphate, isodecyl diphenyl phosphate, triisopropyl phosphate, and the like.

It is preferred that the plasticizer include a diester plasticizer represented by the following formula (1). By the use of the diester plasticizer, the sound insulating properties of the laminated glass are further enhanced.

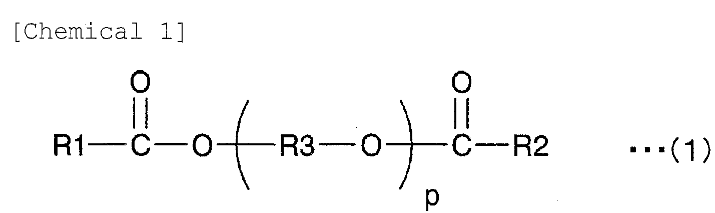

In the foregoing formula (1), R1 and R2 each represent an organic group with 5 to 10 carbon atoms, R3 represents an ethylene group, isopropylene group or n-propylene group, and p represents an integer of 3 to 10. It is preferred that R1 and R2 in the foregoing formula (1) each be an organic group with 6 to 10 carbon atoms.

It is preferred that the plasticizer include at least one kind among triethylene glycol di-2-ethylhexanoate (3GO) and triethylene glycol di-2-ethylbutyrate (3GH), and it is more preferred that the plasticizer include triethylene glycol di-2-ethylhexanoate.

With regard to the first layer and the whole laminate, relative to 100 parts by weight of the polyvinyl acetal, the content of the plasticizer is preferably 20 parts by weight or more, more preferably 30 parts by weight or more, further preferably 40 parts by weight or more, especially preferably 50 parts by weight or more, and preferably 80 parts by weight or less, more preferably 78 parts by weight or less, further preferably 75 parts by weight or less, and especially preferably 72 parts by weight or less. When the content of the plasticizer is not less than the above lower limit, the tear strength of the intermediate film and the penetration resistance of the laminated glass are further enhanced. When the content of the plasticizer is not more than the above upper limit, the transparency of the intermediate film is further enhanced.

With regard to the second layer, relative to 100 parts by weight of the polyvinyl acetal, the content of the plasticizer is preferably 25 parts by weight or more, more preferably 30 parts by weight or more, further preferably 35 parts by weight or more, and preferably 50 parts by weight or less, more preferably 45 parts by weight or less, further preferably 43 parts by weight or less, especially preferably 38 parts by weight or less. When the content of the plasticizer is not less than the above lower limit, the adhesive force of the intermediate film is enhanced and the penetration resistance of the laminated glass is further enhanced. When the content of the plasticizer is not more than the above upper limit, the transparency of the intermediate film is further enhanced.

From the viewpoint of further enhancing the sound insulating properties of the laminated glass, the content of the plasticizer in each of the first layer and the laminate relative to 100 parts by weight of the polyvinyl acetal is preferably larger, more preferably larger by 5 parts by weight or more, even more preferably larger by 10 parts by weight or more, further preferably larger by 15 parts by weight or more, and especially preferably larger by 20 parts by weight or more, than the content of the plasticizer in the second layer relative to 100 parts by weight of the polyvinyl acetal.

Moreover, from the viewpoint of further improving the tear strength and the sound insulating properties, in the case where the laminate has the First layer X containing the Polyvinyl acetal A or the Polyvinyl acetal B and the First layer Y containing the Polyvinyl acetal C, the content of the plasticizer contained in the First layer X relative to 100 parts by weight of the Polyvinyl acetal A or the Polyvinyl acetal B is preferably larger, more preferably larger by 5 parts by weight or more, further preferably larger by 10 parts by weight or more, and especially preferably larger by 15 parts by weight or more, than the content of the plasticizer contained in the First layer Y relative to 100 parts by weight of the Polyvinyl acetal C.

### (Other ingredients)

The first and second layers in the intermediate film for laminated glass according to the present invention each may contain additives such as an ultraviolet ray absorber, an oxidation inhibitor, a light stabilizer, a flame retardant, an antistatic agent, a pigment, a dye, an adhesive strength regulating agent, a moisture-resistance improving agent, a fluorescent brightening agent, an infrared ray absorber and the like, as necessary.

### (Production method of intermediate film for laminated glass)

Examples of the production method of the intermediate film for laminated glass according to the present invention include a wet lamination method, a dry lamination method, an extrusion coating method, a multi-layer melt extrusion molding method, a hot melt lamination method, a heat lamination method and the like.

It is preferred that the intermediate film for laminated glass according to the present invention be obtained by a multi-layer melt extrusion molding method, since the production is easy and an intermediate film further excellent in tear strength and sound insulating properties is obtained. Examples of the multi-layer melt extrusion molding method include a multi-manifold method, a feed block method and the like.

From the viewpoints of easily producing an intermediate film and improving the tear strength, the adhesive force, the penetration resistance and the sound insulating properties with good balance, it is preferred that the production method of the intermediate film for laminated glass according to the present invention include the step of molding a laminate in which 10 or more layers of first layers containing a thermoplastic resin are layered by a multi-layer melt extrusion molding method. From the viewpoints of further easily producing an intermediate film and further improving the tear strength, the adhesive force, the penetration resistance and the sound insulating properties with good balance, it is preferred that the laminate be molded by a multi-manifold method or a feed block method. It is preferred that the production method of the intermediate film for laminated glass according to the present invention include the step of layering one or two second layers mentioned above on one surface or both surfaces of the laminate.

Examples of a method of embossing the outer surface opposite to the laminate side of the second layer include an embossing roll method, a lip emboss method and the like. Of these, since it is possible to perform an emboss processing so that a constant uneven pattern is quantitatively formed, the embossing roll method is preferred.

### (Laminated glass)

The intermediate film for laminated glass according to the present invention is used for obtaining laminated glass.

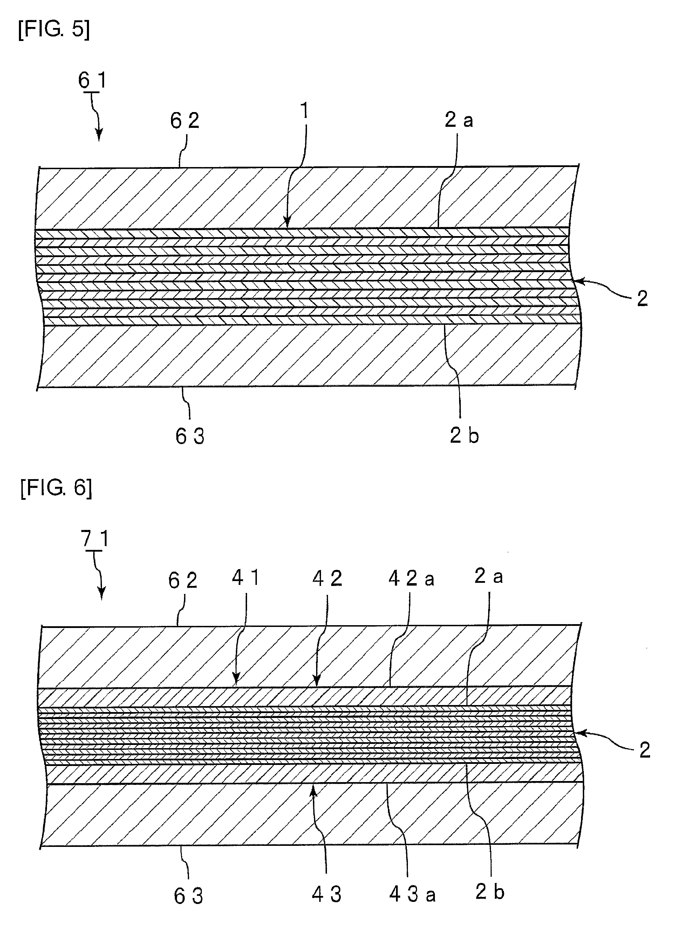

Fig. 5 shows an example of laminated glass using an intermediate film 1 shown in Fig. 1 schematically represented as a cross-sectional view.

Laminated glass 61 shown in Fig. 5 is provided with a first component for laminated glass 62, a second component for laminated glass 63, and an intermediate film 1. The intermediate film 1 is sandwiched between the first component for laminated glass 62 and the second component for laminated glass 63.

The first component for laminated glass 62 is layered on a first surface 2a of a laminate 2 which is the intermediate film 1. The second component for laminated glass 63 is layered on a second surface 2b of the laminate 2 which is the intermediate film 1. Thus, the laminated glass 61 is constituted by layering the first component for laminated glass 62, the laminate 2 which is the intermediate film 1, and the second component for laminated glass 63 in this order.

Fig. 6 shows an example of laminated glass using an intermediate film 41 shown in Fig. 3 schematically represented as a cross-sectional view.

Laminated glass 71 shown in Fig. 6 is provided with a first component for laminated glass 62, a second component for laminated glass 63, and an intermediate film 41. The intermediate film 41 has a second layer 42, a laminate 2, and a second layer 43. The intermediate film 41 is sandwiched between the first component for laminated glass 62 and the second component for laminated glass 63.

The first component for laminated glass 62 is layered on an outer surface 42a of the second layer 42. The second component for laminated glass 63 is layered on an outer surface 43a of the second layer 43.

Examples of the first and second components for laminated glass include a glass plate and a PET (polyethylene terephthalate) film and the like. As the laminated glass, laminated glass in which an intermediate film is sandwiched between a glass plate and a PET film or the like, as well as laminated glass in which an intermediate film is sandwiched between two glass plates, is included. Laminated glass is a laminate provided with a glass plate and it is preferred that at least one glass plate be used.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, net-reinforced plate glass, wired plate glass, and the like. The organic glass is synthetic resin glass substituted for inorganic glass. Examples of the organic glass include a polycarbonate plate, an acrylic resin plate and the like. Examples of the acrylic resin plate include a polymethyl methacrylate plate and the like.

The thickness of each of the first and second components for laminated glass is preferably 0.5 mm or more, more preferably 1 mm or more, and preferably 5 mm or less, and more preferably 3 mm or less. Moreover, in the case where the component for laminated glass is a glass plate, the thickness of the glass plate is preferably 1 mm or more and preferably 3 mm or less. In the case where the component for laminated glass is a PET film, the thickness of the PET film is preferably 0.03 mm or more and preferably 0.5 mm or less.

The production method of the laminated glass is not particularly limited. For example, an intermediate film is sandwiched between the first and second components for laminated glass and the air remaining between each of the first and second components for laminated glass and the intermediate film is removed by allowing the laminate body to pass through a pressing roll or by putting the laminate body into a rubber bag and allowing laminate body to be sucked under reduced pressure. Afterward, the laminate body is preliminarily bonded together at about 70 to 110°C to obtain a laminate. Next, by putting the laminate into an autoclave or by pressing the laminate, the laminate is press-bonded together at about 120 to 150°C and under a pressure of 1 to 1.5 MPa. In this way, laminated glass can be obtained. In the case where the outer surface opposite to the laminate side of the second layer is embossed, the air remaining between each of the first and second components for laminated glass and the intermediate film can be further effectively removed.

The laminated glass can be used for automobiles, railway vehicles, aircraft, ships, buildings and the like. The laminated glass can also be used for applications other than these. It is preferred that the laminated glass be laminated glass for construction or for vehicles, and it is more preferred that the laminated glass be laminated glass for vehicles. The laminated glass can be used for a windshield, side glass, rear glass or roof glass of an automobile and the like.

The haze value of the laminated glass is preferably 3% or less, more preferably 2% or less, even more preferably 1% or less, further preferably 0.5% or less, and especially preferably 0.4% or less. The haze value of laminated glass can be measured in accordance with JIS K6714. Moreover, in order to make the haze of the laminated glass low, it is preferred that the first layer contain no filler, and it is preferred that the second layer contain no filler.

Hereinafter, the present invention will be described in more detail with reference to examples. The present invention is not limited only to these examples.

The butyralization degree (acetalization degree), the acetylation degree and the content ratio of the hydroxyl group of the polyvinyl butyral used in examples and comparative examples were measured by a method in accordance with ASTM D1396-92. In this connection, even in the case of being measured according to JIS K6728 "Testing methods for polyvinyl butyral", numerical values were the same as those obtained by a method in accordance with ASTM D1396-92.

### (Example 1)

To 100 parts by weight of Polyvinyl butyral B (n-butyl aldehyde was used, a polyvinyl alcohol with an average polymerization degree of 2310 was used, the butyralization degree of 64.2% by mole, the acetylation degree of 12.9% by mole, the content ratio of the hydroxyl group of 22.9% by mole), 60 parts by weight of triethylene glycol di-2-ethylhexanoate (3GO) which is a plasticizer was added and thoroughly kneaded with a mixing roll to obtain a Composition B for forming a first layer.

The Composition B for forming a first layer was supplied to a main extruder. Moreover, the Composition B for forming a first layer was also supplied to a sub-extruder. A multi-layer feed block was attached to the tip end of each of the main extruder and the sub-extruder. The thicknesses of first layers extruded from the main extruder and the sub-extruder were set to those listed in the following Table 1, and furthermore, the first layer extruded from the main extruder and the first layer extruded from the sub-extruder were alternately layered to be 10 layers in total, thereby obtaining a laminate with a thickness listed in the following Table 1 as an intermediate film.

### (Examples 2 to 6)

A laminate having 10 layers was prepared by extrusion molding in the same manner as that in Example 1, and then, several sets of multi-layer blocks which are capable of dividing the laminate and layering laminates were attached to the downstream side of the extruders. By layering a plurality of laminates having 10 layers, the number of layers was increased to the number of layers listed in the following Table 1 to obtain a laminate with a thickness listed in the following Table 1 as an intermediate film.

### (Examples 7 and 8)

An intermediate film was obtained in the same manner as that in Example 1 except that the thicknesses of first layers were set to those listed in the following Table 1.

### (Reference Example 1)

An intermediate film was obtained in the same manner as that in Example 1 except that the thicknesses of first layers were set to those listed in the following Table 1 and 6 layers in total of first layers were layered.

### (Example 9)

To 100 parts by weight of Polyvinyl butyral X (n-butyl aldehyde was used, a polyvinyl alcohol with an average polymerization degree of 1700 was used, the butyralization degree of 68% by mole, the acetylation degree of 1% by mole, the content ratio of the hydroxyl group of 31% by mole), 38 parts by weight of triethylene glycol di-2-ethylhexanoate (3GO) which is a plasticizer was added and thoroughly kneaded with a mixing roll to obtain a Composition X for forming a first layer.

An intermediate film was obtained in the same manner as that in Example 1 except that the Composition B for forming a first layer was supplied to a main extruder and the Composition X for forming a first layer was supplied to a sub-extruder.

### (Examples 10 to 14)

A laminate having 10 layers was prepared by extrusion molding in the same manner as that in Example 9, and then, several sets of multi-layer blocks which are capable of dividing the laminate and layering laminates were attached to the downstream side of the extruders. By layering a plurality of laminates having 10 layers, the number of layers was increased to the number of layers listed in the following Table 2 to obtain a laminate with a thickness listed in the following Table 2 as an intermediate film.

### (Examples 15 and 16)

An intermediate film was obtained in the same manner as that in Example 9 except that the thicknesses of first layers were set to those listed in the following Table 2.

### (Reference Example 2)

An intermediate film was obtained in the same manner as that in Example 9 except that the thicknesses of first layers were set to those listed in the following Table 2 and 6 layers in total of first layers were layered.

### (Example 17)

To 100 parts by weight of Polyvinyl butyral C (n-butyl aldehyde was used, a polyvinyl alcohol with an average polymerization degree of 1720 was used, the butyralization degree of 68.8% by mole, the acetylation degree of 0.8% by mole, the content ratio of the hydroxyl group of 30.4% by mole), 39.5 parts by weight of triethylene glycol di-2-ethylhexanoate (3GO) which is a plasticizer was added and thoroughly kneaded with a mixing roll to obtain a Composition C for forming a second layer.

The obtained Composition C for forming a second layer was extruded to obtain a second layer with a thickness listed in the following Table 3.

On a first surface and a second surface, respectively, of a laminate of first layers obtained in Example 1, each of two second layers was layered to obtain a laminate. Afterward, the laminate obtained was passed between embossing rolls, and an emboss processing was performed so as to allow the outer surface of the second layer to have a ten-point average roughness Rz listed in the following Table 3 to obtain an intermediate film.

### (Example 18)

An intermediate film was obtained in the same manner as that in Example 17 except that the laminate of first layers obtained in Example 1 was changed to a laminate obtained in Example 9.

### (Example 19)

An intermediate film was obtained in the same manner as that in Example 17 except that the laminate of first layers obtained in Example 1 was changed to a laminate obtained in Example 12.

### (Example 20)

A laminate having 10 layers was prepared by extrusion molding in the same manner as that in Example 18, and then, several sets of multi-layer blocks which are capable of dividing the laminate and layering laminates were attached to the downstream side of the extruders. By layering a plurality of laminates having 10 layers, the number of layers was increased to the number of layers listed in the following Table 3 to obtain a laminate with a thickness listed in the following Table 3. An intermediate film was obtained in the same manner as that in Example 17 except that the laminate of first layers obtained was used.

### (Comparative Example 1)

An intermediate film was obtained in the same manner as that in Example 1 except that the thicknesses of first layers were set to those listed in the following Table 3 and 4 layers in total of first layers were layered.

### (Comparative Example 2)

The Composition B for forming a first layer obtained in Example 1 was extruded to obtain a single-layered intermediate film with a thickness listed in the following Table 3.

### (Evaluation)

### (1) Tear strength

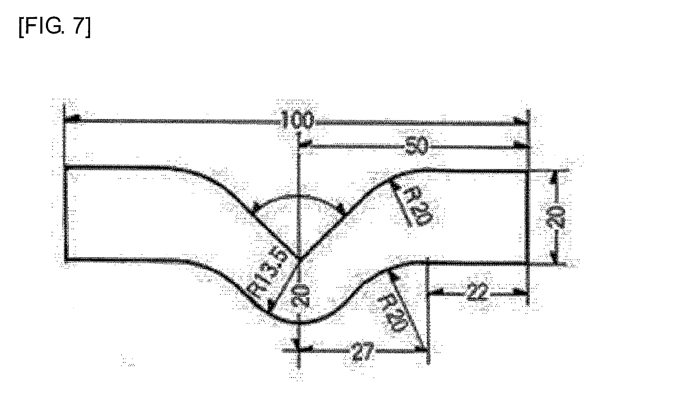

The intermediate film obtained was subjected to be cut by punching so that the direction of the length is directed along the MD direction to obtain a specimen for evaluation with a shape shown in Fig. 7. In this connection, in Fig. 7, the unit for the size expressing the dimensions is mm. The specimen for evaluation obtained was measured for the tear strength using the Autograph "AG-1" (available from Shimadzu Corp.) in accordance with JIS K6781 and the final stress at a breaking point was evaluated.

### (2) Sound insulating properties

The intermediate film obtained was cut into a size of 30 mm in longitudinal length by 320 mm in transversal length. Next, the intermediate film was sandwiched between two sheets of transparent float glass (25 mm in longitudinal length by 305 mm in transversal length by 2.0 mm in thickness), held in place for 30 minutes at 90°C and pressed under vacuum with a vacuum laminator to obtain a laminate. With regard to the laminate, intermediate film portions protruded from the sheets of glass were cut away to obtain a sheet of laminated glass used for the sound insulating properties test.

With regard to the sheet of laminated glass stored for 1 month under an environment of 20°C, using the MultiChannel Signal Analyzer "SA-01" (available from RION Co., Ltd.), a loss factor was measured by a central excitation method under a condition of 20°C. A loss factor at a quaternary mode (around 3150 Hz) of a resonance frequency of the loss factor obtained was evaluated.

### (3) Penetration resistance

The intermediate film obtained was cut into a size of 30 cm in longitudinal length by 30 cm in transversal length. Next, the intermediate film was sandwiched between two sheets of transparent float glass (30 cm in longitudinal length by 30 cm in transversal length by 2.5 mm in thickness) to obtain a laminate. The laminate was put into a rubber bag and degassed for 20 minutes at a degree of vacuum of 2.6 kPa, after which the laminate was transferred into an oven while being degassed, and furthermore, held in place for 30 minutes at 90°C and pressed under vacuum to subject the laminate to preliminary press-bonding. The preliminarily press-bonded laminate was subjected to press-bonding for 20 minutes under conditions of 135°C and a pressure of 1.2 MPa in an autoclave to obtain a sheet of laminated glass used for the penetration resistance test.

With regard to the sheet of laminated glass obtained (30 cm in longitudinal length by 30 cm in transversal length), the surface temperature was adjusted to 23°C. Then, in accordance with JIS R3212, a hard sphere with a mass of 2260 g and a diameter of 82 mm was dropped at the center part of each of six sheets of laminated glass from a height of 4 m. In the case where the hard sphere did not penetrate through each of all the six sheets of laminated glass within 5 seconds after the hard sphere collided therewith, the laminated glass was rated to be acceptable. In the case where sheets of laminated glass through each of which the hard sphere did not penetrate within 5 seconds after the hard sphere collided therewith were three or less sheets, the laminated glass was rated to be unacceptable. In the case where the number of such sheets of laminated glass was four, separately, six sheets of laminated glass were evaluated for the penetration resistance. In the case where the number of such sheets of laminated glass was five, separately, one sheet of laminated glass was additionally tested. In the case where the hard sphere did not penetrate through the sheet of laminated glass within 5 seconds after the hard sphere collided therewith, the laminated glass was rated to be acceptable. In the same manner, a hard sphere with a mass of 2260 g and a diameter of 82 mm was dropped at the center part of each of six sheets of laminated glass from a height of 5 m, 6 m or 7 m to evaluate the penetration resistance of laminated glass.

### (4) Measurement of haze value

The laminated glass used for the evaluation of the above-mentioned (2) Sound insulating properties was prepared. The haze value of the laminated glass obtained was measured in accordance with JIS K6714 using a haze meter ("TC-H III PDK" available from Tokyo Denshoku Co., Ltd.). In this connection, in the following Tables 1 to 3, the case where the haze value exceeded 3% is expressed as "> 3".

The results are shown in the following Tables 1 to 3. In the following Tables 1 to 3, "PVA" refers to polyvinyl alcohol and "3GO" refers to triethylene glycol di-2-ethylhexanoate.

### (Examples 21 to 24)

To 100 parts by weight of Polyvinyl butyral A (n-butyl aldehyde was used, a polyvinyl alcohol with an average polymerization degree of 4000 was used, the butyralization degree of 79% by mole, the acetylation degree of 0.8% by mole, the content ratio of the hydroxyl group of 22.2% by mole), 60 parts by weight of triethylene glycol di-2-ethylhexanoate (3GO) which is a plasticizer was added and thoroughly kneaded with a mixing roll to obtain a Composition A for forming a first layer.

In Example 21, the Composition B supplied to a main extruder and a sub-extruder was changed to the Composition A. In Examples 22 to 24, the Composition B supplied to a main extruder was changed to the Composition A. Moreover, in Example 21, an intermediate film was obtained in the same manner as that in Example 17 except that the Composition B was changed to the Composition A. In Example 22, an intermediate film was obtained in the same manner as that in Example 18 except that the Composition B was changed to the Composition A. In Example 23, an intermediate film was obtained in the same manner as that in Example 19 except that the Composition B was changed to the Composition A. In Example 24, an intermediate film was obtained in the same manner as that in Example 20 except that the Composition B was changed to the Composition A.

Similarly to the intermediate films obtained in Examples 17 to 20, the intermediate films obtained in Examples 21 to 24 were evaluated for the tear strength and the haze value. With regard to the tear strength and the haze value, all of the evaluation results in Examples 21 to 24 are satisfactory, Example 21 shows the evaluation results similar to those in Example 17, Example 22 shows the evaluation results similar to those in Example 18, Example 23 shows the evaluation results similar to those in Example 19, and Example 24 shows the evaluation results similar to those in Example 20.

**[Table 1]**

| | | | | Ex. 1 | Ex. 2 | Ex. 3 | Ex. 4 | Ex. 5 | Ex. 6 | Ex. 7 | Ex. 8 | Ref. EX.1 |
|---|---|---|---|---|---|---|---|---|---|---|---|---|
| Composition of first layer | Polyvinyl butyral resin | Average polymerization degree of PVA | - | 2310 | | | | | | | | |
| | | Butyralization degree | mol% | 64.2 | | | | | | | | |
| | | Acetylation degree | mol% | 12.9 | | | | | | | | |
| Composition forforming first layer (main extruder) | | Content ratio of hydroxyl group | mol% | 22.9 | | | | | | | | |
| | | Content | parts by weight | 100 | | | | | | | | |
| | Plasticizer | Kind | - | 3GO | | | | | | | | |
| | | Content | parts by weight | 60 | | | | | | | | |
| Composition of first layer | Polyvinyl butyral resin | Average polymerisation degree of PVA | - | 2310 | | | | | | | | |
| | | Butyralization degree | mol% | 64.2 | | | | | | | | |
| | | Acetylation degree | mol% | 12.9 | | | | | | | | |
| Composition for forming first layer (sub-extruder) | | Content ratio of hydroxyl group | mol% | 22.9 | | | | | | | | |
| | | Content | parts by weight | 100 | | | | | | | | |
| | Plasticizer | Kind | - | 3GO | | | | | | | | |
| | | Content | parts by weight | 60 | | | | | | | | |
| Number of first layers | | | - | 10 | 20 | 40 | 80 | 160 | 640 | 10 | 10 | 6 |
| Thickness X of one layer of first layers extruded from main extruder | | | *µ*m | 76.0 | 38.0 | 19.0 | 9.5 | 4.8 | 1.2 | 80.0 | 84.0 | 126.7 |
| Thickness Y of one layer of first layers extruded from sub-extruder | | | *µ*m | 76.0 | 38.0 | 19.0 | 9.5 | 4.8 | 1.2 | 72.0 | 68.0 | 126.7 |
| Thickness ratio (thickness X/thickness Y) | | | - | 1.00 | 1.00 | 1.00 | 1.00 | 1.00 | 1.00 | 1.11 | 1.24 | 1.00 |
| Thickness of laminate or the whole first layer | | | *µ*m | 760 | 760 | 760 | 760 | 760 | 760 | 760 | 760 | 760 |
| Composition of second layer | Polyvinyl butyral resin | Average polymerization degree of PVA | - | | | | | | | | | |
| | | Butyralization degree | mol% | | | | | | | | | |
| | | Acetylation degree | mol% | | | | | | | | | |
| Composition for forming second layer | | Content ratio of hydroxyl group | mol% | | | | | | | | | |
| | | Content | parts by weight | | | | | | | | | |
| | Plasticizer | Kind | | | | | | | | | | |
| | | Content | parts by weight | | | | | | | | | |
| Thickness of one layer of second layers | | | *µ*m | | | | | | | | | |
| Ten-point average roughness Rz on the outer surface of second layer | | | *µ*m | | | | | | | | | |
| The whole thickness | | | *µ*m | 760 | 760 | 760 | 760 | 760 | 760 | 760 | 760 | 760 |
| Evaluation | (1) Tear strength (final stress) | | Mpa | 1.2 | 1.4 | 1.6 | 1.9 | 2.4 | 2.4 | 1.2 | 1.2 | 1.0 |
| | (2) Sound insulating properties: 20°C loss factor at around 3150 Hz | | - | 0.19 | 0.19 | 0.20 | 0.21 | 0.21 | 0.21 | 0.19 | 0.19 | 0.19 |
| | (3) Penetration resistance | | 4m | Acceptable | Acceptable | Acceptable | Acceptable | Acceptable | Acceptable | Acceptable | Acceptable | Acceptable |
| | | | 5m | Acceptable | Acceptable | Acceptable | Acceptable | Acceptable | Acceptable | Acceptable | Acceptable | Acceptable |
| | | | 6m | - | - | Acceptable | Acceptable | Acceptable | Acceptable | - | - | - |
| | | | 7m | - | - | - | - | Acceptable | Acceptable | - | - | - |
| | (4) Haze value | | - | 0.47 | 0.51 | 0.55 | 0.59 | 0.65 | 0.77 | 0.47 | 0.48 | 0.41 |

**[Table 2]**

| | | | | Ex. 9 | Ex. 10 | Ex. 11 | Ex. 12 | Ex. 13 | Ex. 14 | Ex. 15 | Ex. 16 | Ref. EX.2 |
|---|---|---|---|---|---|---|---|---|---|---|---|---|
| Composition of first layer | Polyvinyl butyral resin | Average polymerization degree of PVA | - | 2310 | | | | | | | | |
| | | Butyralization degree | mol% | 64.2 | | | | | | | | |
| Composition forforming first layer (main extruder) | | Acetylation degree | mol% | 12.9 | | | | | | | | |
| | | Content ratio of hydroxyl group | mol% | 22.9 | | | | | | | | |
| | | Content | parts by weight | 100 | | | | | | | | |
| | Plasticizer | Kind | - | 3GO | | | | | | | | |
| | | Content | parts by weight | 60 | | | | | | | | |
| Composition of first layer | Polyvinyl butyral resin | Average polymerization degree of PVA | - | 1700 | | | | | | | | |
| | | Butyralization degree | mol% | 68 | | | | | | | | |
| Composition forforming first layer (sub-extruder) | | Acetylation degree | mol% | 1 | | | | | | | | |
| | | Content ratio of hydroxyl group | mol% | 31 | | | | | | | | |
| | | Content | parts by weight | 100 | | | | | | | | |
| | Plasticizer | Kind | - | 3GO | | | | | | | | |
| | | Content | parts by weight | 38 | | | | | | | | |
| Numberof first layers | | | - | 10 | 20 | 40 | 80 | 160 | 640 | 10 | 10 | 6 |
| Thickness X of one layer of first layers extruded from main extruder | | | *µ*m | 76.0 | 38.0 | 19.0 | 9.5 | 4.8 | 1.2 | 80.0 | 84.0 | 126.7 |
| Thickness Y of one layer of first layers extruded from sub-extruder | | | *µ*m | 76.0 | 38.0 | 19.0 | 9.5 | 4.8 | 1.2 | 72.0 | 68.0 | 126.7 |
| Thickness ratio (thickness X/thickness Y) | | | - | 1.00 | 1.00 | 1.00 | 1.00 | 1.00 | 1.00 | 1.11 | 1.24 | 1.00 |
| Thickness of laminate or the whole first layer | | | *µ*m | 760 | 760 | 760 | 760 | 760 | 760 | 760 | 760 | 760 |
| Composition of second layer | Polyvinyl butyral resin | Average polymerization degree of PVA | - | | | | | | | | | |
| | | Butyralization degree | mol% | | | | | | | | | |
| | | Acetylation degree | mol% | | | | | | | | | |
| Composition for forming second layer | | Content ratio of hydroxyl group | mol% | | | | | | | | | |
| | | Content | parts by weight | | | | | | | | | |
| | Plasticizer | Kind | - | | | | | | | | | |
| | | Content | parts by weight | | | | | | | | | |
| Thickness of one layer of second layers | | | *µ*m | | | | | | | | | |
| Ten-point average roughness Rzon the outer surface of second layer | | | *µ*m | | | | | | | | | |
| The whole thickness | | | *µ*m | 760 | 760 | 760 | 760 | 760 | 760 | 760 | 760 | 760 |
| Evaluation | (1) Tear strength (final stress) | | Mpa | 2.6 | 2.9 | 3.0 | 3.1 | 3.7 | 3.7 | 2.6 | 2.5 | 2.0 |
| | (2) Sound insulating properties: 20°C loss factor at around 3150 Hz | | - | 0.30 | 0.31 | 0.33 | 0.35 | 0.39 | 0.40 | 0.30 | 0.30 | 0.29 |
| | (3) Penetration resistance | | 4m | Acceptable | Acceptable | Acceptable | Acceptable | Acceptable | Acceptable | Acceptable | Acceptable | Acceptable |
| | | | 5m | Acceptable | Acceptable | Acceptable | Acceptable | Acceptable | Acceptable | Acceptable | Acceptable | Acceptable |
| | | | 6m | Acceptable | Acceptable | Acceptable | Acceptable | Acceptable | Acceptable | Acceptable | Acceptable | Acceptable |
| | | | 7m | Acceptable | Acceptable | Acceptable | Acceptable | Acceptable | Acceptable | Acceptable | Acceptable | - |
| | (4) Haze value | | - | >3 | >3 | >3 | >3 | >3 | >3 | >3 | >3 | >3 |

**[Table 3]**

| | | | | Ex. 17 | Ex. 18 | Ex.19 | Ex. 20 | Comp. Ex. 1 | Comp. Ex. 2 |
|---|---|---|---|---|---|---|---|---|---|
| Composition of first layer Composition | Polyvinyl butyral resin | Average polymerization degree of PVA | - | 2310 | 2310 | 2310 | 2310 | 2310 | |
| | | Butyralization degree | mol% | 64.2 | 64.2 | 64.2 | 64.2 | 64.2 | |
| | | Acetylation degree | mol% | 12.9 | 12.9 | 12.9 | 12.9 | 12.9 | |
| for forming first layer (main extruder) | | Content ratio of hydroxy group | mol% | 22.9 | 22.9 | 22.9 | 22.9 | 22.9 | |
| | | Content | parts by weight | 100 | 100 | 100 | 100 | 100 | |
| | Plasticizer | Kind | - | 3GO | 3GO | 3GO | 3GO | 3GO | |
| | | Content | parts by weight | 60 | 60 | 60 | 60 | 60 | |
| Composition of first layer | Polyvinyl butyral resin | Average polymerization degree of PVA | - | 2310 | 1700 | 1700 | 1700 | 2310 | - |
| | | Butyralization degree | mol% | 64.2 | 68 | 68 | 68 | 64.2 | - |
| | | Acetylation degree | mol% | 12.9 | 1 | 1 | 1 | 12.9 | - |
| Composition forforming first layer (sub-extruder) | | Content ratio of hydroxyl group | mol% | 22.9 | 31 | 31 | 31 | 22.9 | - |
| | | Content | parts by weight | 100 | 100 | 100 | 100 | 100 | - |
| | Plasticizer | Kind | - | 3GO | 3GO | 3GO | 3GO | 3GO | - |
| | | Content | parts by weight | 60 | 38 | 38 | 38 | 60 | - |
| Number offirst layers | | | - | 10 | 10 | 80 | 80 | 4 | 1 |
| Thickness X of one layer of first layers extruded from main extruder | | | *µ*m | 76.0 | 76.0 | 9.5 | 7.0 | 190 | |
| Thickness Y of one layer of first layers extruded from sub-extruder | | | *µ*m | 76.0 | 76.0 | 9.5 | 7.0 | 190 | |
| Thickness ratio (thickness X/thickness Y) | | | - | 1.00 | 1.00 | 1.00 | 1.00 | 1.00 | |
| Thickness of laminate or the whole first layer | | | *µ*m | 760 | 760 | 760 | 560 | 760 | 760 |
| Composition of second layer | Polyvinyl butyral resin | Average polymerization degree of PVA | - | 1720 | 1720 | 1720 | 1720 | | |
| | | Butyralization degree | mol% | 68.8 | 68.8 | 68.8 | 68.8 | | |
| | | Acetylation degree | mol% | 0.8 | 0.8 | 0.8 | 0.8 | | |
| Composition for forming second layer | | Content ratio of hydroxyl group | mol% | 30.4 | 30.4 | 30.4 | 30.4 | | |
| | | Content | parts by weight | 100 | 100 | 100 | 100 | | |
| | Plasticizer | Kind | - | 3GO | 3GO | 3GO | 3GO | | |
| | | Content | parts by weight | 39.5 | 39.5 | 39.5 | 39.5 | | |
| Thickness of one layer of second layers | | | *µ*m | 100 | 100 | 100 | 100 | | |
| Ten-point average roughness Rz on the outer surface of second layer | | | *µ*m | 30 | 30 | 30 | 30 | | |
| The whole thickness | | | *µ*m | 960 | 960 | 960 | 760 | 760 | 760 |
| Evaluation | (1) Tear strength (final stress) | | Mpa | 2.5 | 2.8 | 3.8 | 3.7 | 0.7 | 0.5 |
| | (2) Sound insulating properties: 20°C loss factor at around 3150 Hz | | - | 0.29 | 0.31 | 0.36 | 0.36 | 0.18 | 0.18 |
| | (3) Penetration resistance | | 4m | Acceptable | Acceptable | Acceptable | Acceptable | - | - |
| | | | 5m | Acceptable | Acceptable | Acceptable | Acceptable | - | - |
| | | | 6m | Acceptable | Acceptable | Acceptable | Acceptable | - | - |
| | | | 7m | Acceptable | Acceptable | Acceptable | Acceptable | - | - |
| | (4) Haze value | | - | 0.41 | 2.01 | 2.25 | 1.74 | 0.36 | 0.35 |

### EXPLANATION OF SYMBOLS

1: Intermediate film
2: Laminate
2a: First surface
2b: Second surface
11A to 11K: First layers
21: Intermediate film
22a: First surface
22b: Second surface
31A to 31F and 32A to 32E: First layers
41: Intermediate film
42 and 43: Second layers
42a and 43a: Outer surfaces
51: Intermediate film
61: Laminated glass
62: First component for laminated glass
63: Second component for laminated glass
71: Laminated glass

## Claims

1. An intermediate film for laminated glass used for obtaining laminated glass, comprising a laminate in which 10 or more layers of first layers containing a thermoplastic resin are layered.

2. The intermediate film for laminated glass according to claim 1,
wherein the laminate is a laminate in which 10 or more layers of first layers containing a polyvinyl acetal as the thermoplastic resin and a plasticizer are layered.

3. The intermediate film for laminated glass according to claim 2,
wherein the acetylation degree of the polyvinyl acetal is 8% by mole or less and the acetalization degree thereof is 70% by mole or more, or the acetylation degree of the polyvinyl acetal exceeds 8% by mole.

4. The intermediate film for laminated glass according to any one of claims 1 to 3,
wherein the average thickness of the first layer is 5 nm or more and 100 µm or less.

5. The intermediate film for laminated glass according to any one of claims 1 to 4,
wherein the thickness of the laminate is 0.05 mm or more and 3 mm or less.

6. The intermediate film for laminated glass according to any one of claims 1 to 5,
wherein at least one among the thickness ratios of the first layers adjacent to each other exceeds 1.1.

7. The intermediate film for laminated glass according to claim 6,
wherein at least one among the thickness ratios of the first layers adjacent to each other exceeds 1.2.

8. The intermediate film for laminated glass according to any one of claims 1 to 7, further comprising one or two second layers with a thickness thicker than any layer-thickness of the first layers,
wherein the second layer is layered on one surface or both surfaces of the laminate.

9. The intermediate film for laminated glass according to claim 8,
wherein the second layer contains a polyvinyl acetal and a plasticizer.

10. The intermediate film for laminated glass according to claim 8 or 9,
wherein the outer surface opposite to the laminate side of the second layer is embossed.

11. The intermediate film for laminated glass according to any one of claims 8 to 10,
wherein the thickness of one layer of the second layer is 0.05 mm or more and 1 mm or less.

12. The intermediate film for laminated glass according to any one of claims 1 to 11,
wherein the laminate is obtained by a multi-layer melt extrusion molding method.

13. The intermediate film for laminated glass according to any one of claims 1 to 12,
wherein the thermoplastic resin is constituted of a first polyvinyl acetal and a second polyvinyl acetal,
a first layer containing the first polyvinyl acetal and a first layer containing the second polyvinyl acetal are alternately layered to be 10 or more layers in total, and
the polymerization degrees of the first polyvinyl acetal and the second polyvinyl acetal differ by 10 or more.

14. A method for producing the intermediate film for laminated glass according to any one of claims 1 to 13, comprising the step of molding a laminate in which 10 or more layers of first layers containing a thermoplastic resin are layered by a multi-layer melt extrusion molding method.

15. The method according to claim 14,
wherein the laminate is molded by a multi-manifold method or a feed block method.

16. The method according to claim 14 or 15, further comprising the step of layering one or two second layers with a thickness thicker than any layer-thickness of the first layers on one surface or both surfaces of the laminate.

17. Laminated glass, comprising a first component for laminated glass, a second component for laminated glass and the intermediate film for laminated glass according to any one of claims 1 to 13 sandwiched between the first component for laminated glass and the second component for laminated glass.
